# EUROPEAN PATENT SPECIFICATION

(11) **EP 0 695 019 B1**
(45) Date of publication and mention of the grant of the patent: **24.09.1997**
(21) Application number: 95111328.1
(22) Date of filing: 19.07.1995
(51) Int. Cl.: H02K 3/48, H02K 3/12

(54) **A rotor for an electrical machine, in particular for an electric motor for starting the internal combustion engine of a motor vehicle, and a process for its production**
Elektromachinerotor, insbesondere für einen Elektromotor, der eine Wärmkraftmaschine eines Fahrzeugs anfählt und Vorrichtung für seine Herstellung
Rotor pour machine électrique, en particulier pour moteur électrique destiné à faire démarrer le moteur à combustion interne d'un véhicule automobile et procédé pour sa fabrication

(30) Priority: 27.07.1994 IT TO940624
(43) Date of publication of application: 31.01.1996
(73) Proprietor: MAGNETI MARELLI MANUFACTURING SPA, 20145 Milano (IT)
(72) Inventor: Fasola, Giancarlo, I-20145 Milano (IT); Nicolini, Giuseppe, I-20144 Milano (IT)
(74) Representative: Serra, Francesco

(56) References cited:
- DE-A- 3 347 195
- DE-C- 572 619
- FR-A- 1 573 177
- FR-A- 2 415 385
- DEUTSCHE ELEKTROTECHNIK, vol. 13, no. 5, May 1959, Berlin, pp. 165-168; R. KRETZSCHMANN: "Gesichtspunkte für die Herstellung und Auswahl von explosionsgeschützten Drehstrom-Asynchronmotoren"

## Description

The present invention relates to a rotor of an electrical machine, in particular of a direct current electric motor for starting the internal combustion engine of a motor vehicle.

More specifically, the invention relates to a rotor comprising a stack of laminations, in the periphery of which are provided radial slots, each of which accommodates a group of insulated electrical conductors and has a mouth portion having a width which corresponds substantially to the diameter of a conductor and accommodates the radially outermost conductor of the group.

According to the prior art, in order to fasten the conductors stably and securely in the respective slots in the rotor, these slots are produced with a depth in the radial direction which is markedly greater than the depth which is strictly necessary for accommodating the corresponding electrical conductors. The edges of the slots are thus plastically deformed, usually during stamping operations performed at a given pitch along the slots such that the plastically deformed edges prevent the conductors from escaping from the slots.

As already mentioned, this solution implies that the slots are arranged with a radial depth which is substantially greater than the measurement which would strictly be necessary for guaranteeing the accommodation of the conductors. This is to the detriment of the intensity of the magnetic flux which affects the operation of the rotor.

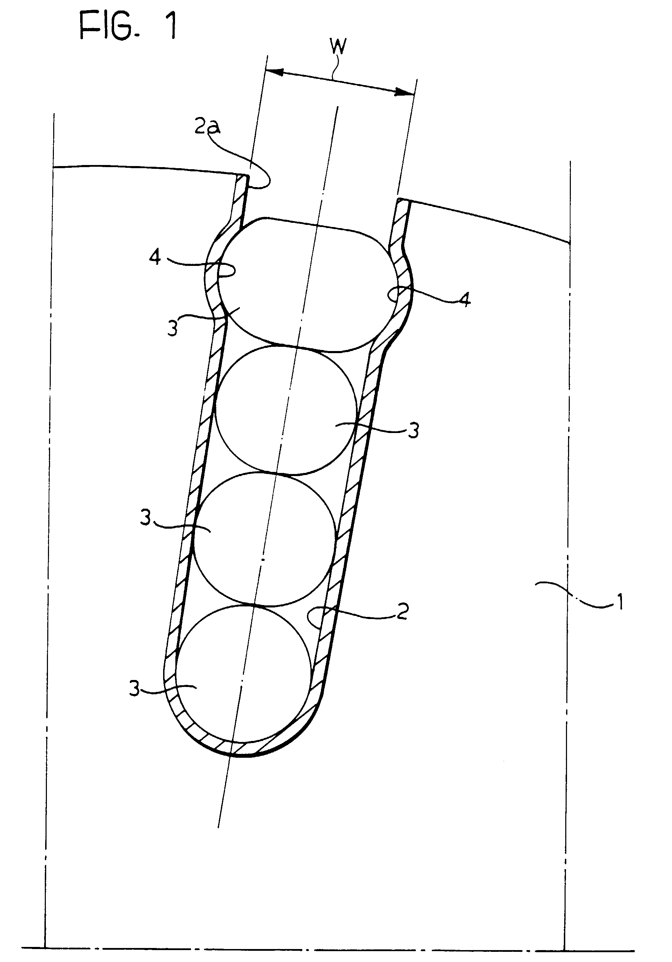

It has already been proposed in Italian Patent Application No. TO91A000784 of 16 October 1991 in the name of the same applicant , to produce a rotor for an electrical machine, described in Figure 1, comprising a stack of laminations 1 in the periphery of which there are radial slots 2 each of which accommodates a group of insulated electrical conductors 3 and has a mouth portion 2a having a width W which corresponds to the diameter of a conductor 3 and accommodates the radially outermost conductor of this group.

The mouth portion 2a of each slot 2 has opposite recesses 4 and the outermost conductor of each slot 2 is deformed plastically and has a flattened portion, the opposite ends of which engage in the recesses 4, preventing the conductors 3 from escaping from the slot 2.

The slots 2 have a constant width which is substantially equal to the diameter of the conductors 3, except in correspondence with the recesses 4. The height or depth of the slots is substantially equal to the sum of the diameters of the conductors 3 accommodated therein.

The object of the present invention is to provide a rotor of the above-mentioned type which, with respect to what has been described above, maintaining constant the diameter of the rotor, the number of the slots and the number and diameter of the conductors per slot, enables the minimum width of the part made of ferromagnetic material to be increased between slots and the width in the peripheral direction of the teeth defined between pairs of adjacent slots, ultimately obtaining - whilst the other geometrical conditions remain the same - an increase in the cross-section of the rotor which is operationally affected by the magnetic flux and thus an increase in the torque provided by the starter motor, whilst the number of revolutions remains the same.

The present invention achieves the above objects by means of a rotor of the type specified above having the characteristics mentioned specifically in the following claims.

Further characteristics and advantages of the present invention will become clear from the following detailed description, given purely by way of non-limiting example, with reference to the appended drawings, in which:
- Figure 1 (already described) is a partial view in cross-section of a rotor according to the prior art;
- Figure 2 is a partial view in cross-section of a rotor according to the invention in a first assembly phase; and
- Figure 3 is a partial view in cross-section of a rotor according to the invention after assembling operation.

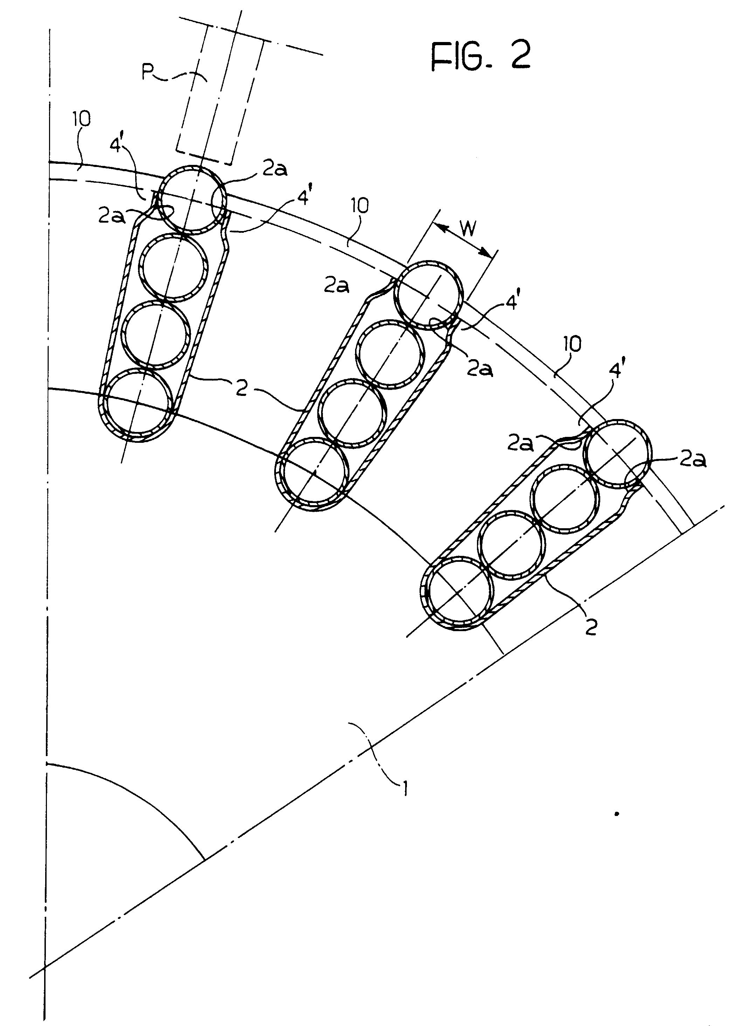

With reference to Figure 2, in which details which are identical or similar to those in Figure 1 are indicated by the same reference numerals, the radial slots 2 (the surfaces of which can be covered with an insulating material according to the prior art) have the mouth portion 2a comprising two opposite projections 4' between which is a distance W substantially corresponding to the diameter of a conductor 3.

The portion of the radial slots 2 inward of the mouth portion 2a has a width in the peripheral sense which is greater than the diameter of a conductor 3; this portion decreases radially until, at the base of the slot 2, it is substantially equal to the diameter of a conductor 3.

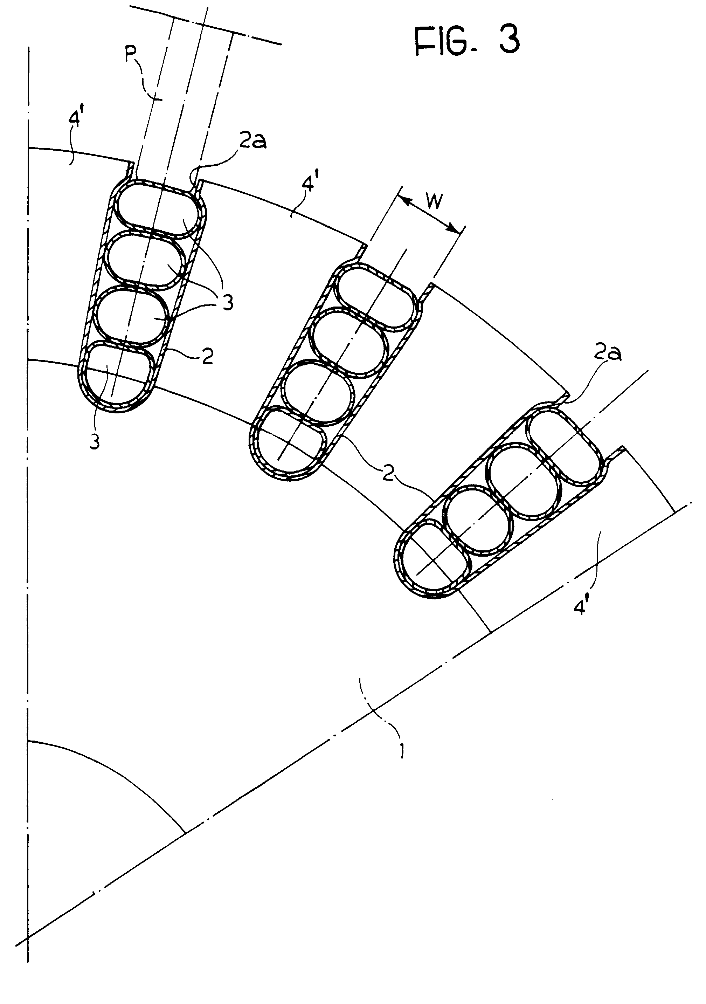

As can be seen in Figure 2, the overall depth of the slots 2 is less than the sum of the diameters of the conductors 3 accommodated therein (four in the case of Figures 2 and 3), for which reason a part of the outermost conductor emerges from the slot over almost half the diameter.

By means of a punch P illustrated in dashed lines in Figures 2 and 3, the conductors 3 are plastically deformed, assuming the flattened shape of Figure 3. In this Figure, the conductors 3 are deformed progressively more markedly from the interior towards the exterior of the slots 2 and have cross-sections which are increasingly more flattened. In each slot the opposite ends of the flattened portions of the outermost conductors engage below the opposite projections 4' so as to prevent the conductors 3 emerging either in static conditions or in the more difficult dynamic conditions when the rotor is operating.

A peripheral layer of machining allowance (10 in Figure 2) can then be removed before the armature and the inductor are assembled to form the starter motor.

By means of the characteristics described, in a rotor according to the invention, with the outer diameter of the rotor remaining the same, the minimum width of the iron between slots increases by approximately 15%, the minimum diameter on which the conductors 3 act increases by approximately 10% and it has been confirmed in experiments that the starting torque increases by approximately 10%.

Variations are possible within the scope of the appended claims.

## Claims

1. A rotor for an electrical machine, in particular for a direct current electric motor for starting the internal combustion engine of a motor vehicle, comprising a stack of laminations (1) in the periphery of which are arranged radial slots (2) each of which accommodates a group of insulated electrical conductors (3) and has a mouth portion (2a) comprising two opposite projections (4') between which is a distance (W) which corresponds substantially to the diameter of a conductor (3), characterised in that the radial slots (2), inwardly of the mouth portion (2a), have a width which is substantially larger than the diameter of a conductor (3), decreasing radially towards the base of the slot, where the section thereof is substantially equal to the diameter of a conductor (3); in that the conductors (3) of each slot (2) are plastically deformed and have flattened transverse portions, the opposite ends of the flattened portions of the outermost conductors (3) engaging below the opposite projections (4'), such that the conductors (3) are prevented from emerging from the slots (2); and in that the overall length of each slot (2) is less than the sum of the diameters of the non-deformed conductors (3) accommodated in the slots (2) themselves.

2. A process for producing a rotor for an electrical machine, in particular for a direct current electric motor for starting an internal combustion engine for a motor vehicle, comprising the operations of:
- disposing a stack of laminations (1) in the periphery of which are provided radial slots (2) for accommodating a group of insulated electrical conductors (3), each slot having a mouth portion (2a) comprising two opposite projections (4'), between which is a distance (W) which corresponds substantially to the diameter of a conductor (3); and
- disposing the conductors (3) in the slots (2) of the stack of laminations (1);
the process being characterised in that the slots (2) are disposed such that, inwardly of the mouth portion (2a), they have a width which is substantially greater than the diameter of a conductor (3), decreasing radially toward the base of the slot (2) where its portion is substantially equal to the diameter of a conductor (3); in that the conductors (3) are plastically deformed in the slots (2) such that they have flattened transverse portions, the opposite ends of the flattened transverse portions of the conductors (3) engaging below the opposite projections (4') such that they prevent the conductors (3) from emerging from the slot (2); and in that the overall length of each slot (2) is less than the sum of the diameters of the non-deformed conductors (3) accommodated in the slot (2) itself.

## Patentansprüche

1. Rotor für eine elektrische Maschine, im besonderen für einen Gleichstrommotor zum Anlassen des Verbrennungsmotors eines Kraftfahrzeugs, wobei der Rotor ein Paket von Lamellen (1) besitzt, an deren Umfang radiale Schlitze (2) angeordnet sind, von denen jeder eine Gruppe von isolierten elektrischen Leitern (3) aufnimmt, wobei jeder Schlitz einen Öffnungsteil (2a) besitzt, der mit zwei gegenüberliegenden Vorsprüngen (4') versehen ist, zwischen denen ein Abstand (W) liegt, der im wesentlichen dem Durchmesser eines Leiters (3) entspricht, dadurch gekennzeichnet, daß die radialen Schlitze (2) innerhalb des Öffnungsteils (2a) eine Breite besitzen, die bedeutend größer als der Durchmesser eines Leiters (3) ist, wobei sie radial zum Boden des Schlitzes abnimmt, der im Querschnitt im wesentlichen gleich dem Durchmesser eines Leiters (3) ist; daß die Leiter (3) eines jeden Schlitzes (2) plastisch verformt werden und abgeflachte Querbereiche besitzen, wobei die gegenüberliegenden Enden der abgeflachten Bereiche der äußersten Leiter (3) unter die gegenüberliegenden Vorsprünge (4') eingreifen, so daß die Leiter (3) daran gehindert werden, daß sie aus den Schlitzen (2) austreten; und daß die Gesamtlänge eines jeden Schlitzes (2) kleiner als die Summe der Durchmesser der unverformten Leiter (3) ist, die in den Schlitzen (2) selbst aufgenommen werden.

2. Verfahren zur Herstellung eines Rotors für eine elektrische Maschine, im besonderen für einen Gleichstrommotor zum Anlassen eines Verbrennungsmotors für ein Kraftfahrzeug, wobei das Verfahren folgende Schritte enthält:
- Anordnen eines Pakets von Lamellen (1), an deren Umfang radiale Schlitze (2) vorgesehen sind, um eine Gruppe von isolierten elektrischen Leitern (3) aufzunehmen, wobei jeder Schlitz einen Öffnungsteil (2a) besitzt, der zwei gegenüberliegende Vorsprünge (4') enthält, zwischen denen ein Abstand (W) liegt, der im wesentlichen dem Durchmesser eines Leiters (3) entspricht; und
- Anordnen der Leiter (3) in den Schlitzen (2) des Pakets von Lamellen (1);
wobei das Verfahren dadurch gekennzeichnet ist, daß die Schlitze (2) so angeordnet sind, daB sie innerhalb des Öffnungsteils (2a) eine Breite besitzen, die wesentlich größer als der Durchmesser eines Leiters (3) ist, wobei die Breite radial zum Boden des Schlitzes (2) abnimmt, an dem sein Teil im wesentlichen gleich dem Durchmesser eines Leiters (3) ist; daß die Leiter (3) in den Schlitzen (2) plastisch verformt werden, so daß sie abgeflachte Querbereiche besitzen, wobei die gegenüberliegenden Enden der abgeflachten Querbereiche der Leiter (3) unter die gegenüberliegenden Vorsprünge (4') eingreifen, so daß sie verhindern, daß die Leiter (3) aus den Schlitzen (2) austreten; und daß die Gesamtlänge eines jeden Schlitzes (2) kleiner als die Summe der Durchmesser der unverformten Leiter (3) ist, die im Schlitz (2) selbst aufgenommen werden.

## Revendications

1. Rotor pour une machine électrique, en particulier pour un moteur électrique à courant continu destiné à faire démarrer le moteur à combustion interne d'un véhicule automobile, comprenant une pile de feuilletages (1), sur la périphérie de laquelle sont ménagées des fentes radiales (2), logeant chacune un groupe de conducteurs électriques (3) isolé et présentant une partie d'embouchure (2a) comportant deux saillies (4') opposées, entre lesquelles est formée une distance (W) qui correspond sensiblement au diamètre d'un conducteur (3), caractérisé en que les fentes radiales (2), vers l'intérieur de la partie d'embouchure (2a), présente une largeur qui est sensiblement supérieure au diamètre d'un conducteur (3), allant en diminuant radialement vers la base de la fente, au niveau de laquelle sa section est sensiblement égale au diamètre d'un conducteur (3); en ce que les conducteurs (3) de chaque fente (2) sont déformés de façon plastique et présentent des parties transversales aplaties, les extrémités opposées des parties aplaties des conducteurs (3) se trouvant le plus à l'extérieur s'engageant au-dessous des saillies (4') opposées, de manière que les conducteurs (3) soient empêchés de sortir des fentes (2); et en ce que la longueur globale de chaque fente (2) est inférieure à la somme des diamètres des conducteurs (3) non déformés, logés dans les fentes (2) elles-mêmes.

2. Procédé de fabrication d'un rotor pour une machine électrique, en particulier pour un moteur électrique à courant continu destiné à faire démarrer un moteur à combustion interne pour un véhicule automobile, comprenant les opérations de :
- disposition d'une pile de feuilletages (1) sur la périphérie de laquelle sont prévues des fentes radiales (2) logeant un groupe de conducteurs électriques (3) isolés, chaque fente ayant une partie d'embouchure (2a), comprenant deux saillies (4') opposées, entre lesquelles est formée une distance (W) qui correspond sensiblement au diamètre d'un conducteur (3); et
- disposition des conducteurs (3) dans les fentes (2) de la pile de feuilletages (1);
le procédé étant caractérisé en ce que les fentes (2) sont disposées de manière que, vers l'intérieur de la partie d'embouchure (2a), elle présente une largeur qui est sensiblement supérieure au diamètre d'un conducteur (3), en diminuant en allant radialement vers la base de la fente (2) au niveau de laquelle sa partie est sensiblement égale au diamètre d'un conducteur (3) ; en ce que les conducteurs (3) sont déformés plastiquement dans les fentes (2) de manière à présenter des parties transversales aplaties, les extrémités opposées des parties transversales aplaties des conducteurs (3) s'engageant au-dessous des saillies (4') opposées, de manière à empêcher les conducteurs (3) de sortir de la fente (2); et en ce que la longueur globale de chaque fente (2) est inférieure à la somme des diamètres des conducteurs (3) non déformés, logés dans la fente (2) elle-même.
